# EUROPEAN PATENT SPECIFICATION

(11) **EP 0 009 909 B1**
(45) Date of publication and mention of the grant of the patent: **02.12.1981**
(21) Application number: 79301927.4
(22) Date of filing: 18.09.1979
(51) Int. Cl.: B05B 1/12, B05B 15/02, B05B 1/30, D21F 1/34, G05D 7/01

(54) **Spray nozzle for a dual-purpose shower system**
Spritzdüse für ein Doppelzweck-Spritzsystem
Buse de pulvérisation pour système pulvérisateur à double fonction

(30) Priority: 18.09.1978 US 943051
(43) Date of publication of application: 16.04.1980
(73) Proprietor: ALBANY INTERNATIONAL CORP., Menards, New York 12201 (US)
(72) Inventor: Nicholson, Charles B., RD1 Glens Falls New York (US)
(74) Representative: Jennings, Roy Alfred

## Description

This invention relates to a spray nozzle for a dual-purpose shower system which has a first operative condition in which liquid is discharged from the nozzle as a high pressure spray and a second operative condition in which liquid is discharged from the nozzle in the form of a low pressure purging flow. Such showers are used in the paper making industry to condition felt or wire fabrics. In the first operative condition water is sprayed under pressure onto a felt in order to actually dislodge dirt particles from the fibre/yarn structure and to resist compaction. In the second operative condition a flood of water or other liquid under low pressure is supplied to the felt surface to flush dirt particles from the felt and to neutralise wet streaks.

Spray nozzles for use in such shower systems and which are capable of providing a purging flow or a spray flow as required are known, for example from U.S. patent no: 2,803,499; U.S. patent no: 2,954,170; and U.S. patent no: 3,990,637. In nozzles of this type two positions of operation are utilised. One position is a spray position and the other position is a purge position.

While the nozzles and shower systems disclosed in the above patents provide many advantages there is still one difficulty with this particular type of system which clearly requires improvement. It is well known that to form a good spray pattern, there must be an adequate supply of liquid presented to the discharge orifice of the nozzle. This can be done by having a large passage through the nozzle to form a reservoir, but the problem with this is that, when the nozzle shifts to the purge position, there is a large increase in the volume of liquid discharged through the nozzle. A single pumping system cannot handle high pump pressures of around 300 to 400 psi with low flows and also handle high flows at low pressures of around 25 psi.

Competitive shower systems that have spring loaded nozzles work with a secondary supply system. Water supply is valved off enough to reduce shower water pressure to cause the nozzles to open and yet hold the pump pressure up to its pressure curve. What is needed then is a second system to supply volume for purging and enough pressure to close the nozzles so that the high pressure pump can again supply the showers.

With the above background in mind, it is an object of the invention to provide an improved spray nozzle for use in shower systems of the kind described so that a good spray is provided in the spray position, and the volume discharge in the purge position is restricted to a level whereby the system can be operated with a single water supply.

According to the invention therefore, such a spray nozzle comprises a generally tubular body, a plunger slidably fitted in the tubular body and movable therein between first and second operative positions, a central passage in the plunger and communicating with the outside of the nozzle so that, in use, liquid can enter the nozzle at one end for discharge from the nozzle at its other end, sealing means between the tubular body and the plunger for confining the liquid flow through the nozzle to the central passage, a valve member carried by the tubular body and disposed in alignment with the central passage so that, in the first operative position of the plunger, an end of the plunger abuts the valve member whereby a blocking surface of the valve member over-lies and blocks a first portion of the central passage and a spray forming surface of the valve member over-lies a second portion of the central passage but is spaced therefrom to cause liquid passing through the central passage in the first operative position to impinge on the spray forming surface and be discharged from the nozzle as a spray, the plunger being arranged to be retained in the spray forming position during the first operative condition of the system by the pressure of the liquid acting on the plunger, means for shifting the plunger from its first to its second operative position when the system is changed to the second operative condition, thereby moving the end of the plunger away from the valve member to allow liquid to be discharged from the nozzle in a relatively free flow, and is characterised by a flow volume control responsive to movement of the plunger between its first and second operative positions to vary the area through which liquid can enter the central passage of the plunger.

In use, the nozzle is mounted in the wall of a spray supply pipe of the dual-purpose shower system so that one end (the end furthest from the valve member) of the tubular body projects into the spray supply pipe so that liquid is able to enter the flow through the central passage from the supply pipe.

Preferably the flow volume control of liquid into the nozzle is accomplished by the provision of an arrangement of ports and openings in the plunger and the tubular body respectively which are shiftable into and out of alignment by movement of the plunger between its operative positions, thereby controlling the area which is available for liquid to pass from the supply pipe into the central passage of the plunger. A groove may be positioned in the body or plunger to facilitate communication between the holes in the respective parts to compensate for any misalignment therebetween.

In a preferred embodiment the central passage of the plunger serves as a reservoir and is fed by a port through the bottom, i.e. at its end furthest from the valve member, and four ports through the side adjacent the bottom. The tubular body surrounding the plunger has four similar openings in its side wall and an open bottom end. When the plunger is in the purge position only the bottom port in the plunger is open to the interior of the spray supply pipe through the open bottom end of the tubular body for the supply of water through the nozzle for purging. By pre-selecting the port size, the amount of water discharged can be controlled. When the plunger is shifted to the spray position, the ports in the side wall of the plunger and the openings in the side wall of the tubular body become aligned via a connecting groove, and with the bottom port of the plunger, there are thus five openings or passageways for liquid from the spray supply pipe to pass into the central passage within the plunger to properly supply the spray. Once again the sizes of the openings and ports help control the volume of the flow of liquid from the spray pipe to the interior of the nozzle, and thus help control operation of the nozzle.

The volume control provided by the arrangement and size of the openings and ports allows for a more easily sized shower system using a single water supply. In this manner, a nozzle can be tailor made to fit a system by merely changing the size and arrangement of the inlet ports and openings.

A preferred example of a spray nozzle in accordance with the invention will now be described with reference to the accompanying drawings, in which:-
Figure 1 is an axial sectional view of the spray nozzle mounted in the wall of a spray supply pipe, the nozzle being shown in its high pressure spray condition with arrows showing the direction of liquid flow from the spray supply pipe into the interior of the nozzle;
Figure 2 is a cross-section, to a larger scale, taken through the nozzle on the line 2-2 in Figure 1;
Figure 3 is a view similar to that of Figure 1 but showing the spray nozzle in its low pressure purge condition; and
Figure 4 is a cross-section, to a larger scale, taken through the nozzle on the line 4-4 in Figure 3.

Certain components of the spray nozzle illustrated are well known and are readily recognisable in the previously mentioned prior art patents, particularly U.S. patent no: 3,990,637. thus, where possible, these components are not described in detail.

In the depicted embodiment, the nozzle has a generally tubular body member or casing 10 which is preferably made of metal, such as stainless steel, and which is mounted in and projects through a hole 11 in the wall of spray supply pipe 12. The tubular body member 10 has a lower end portion 14 which extends through the opening 11 into the interior of the pipe 12, and the upper portion of the body 10 which extends above the spray supply pipe 12 has a threaded outer surface 16 for screw engagement with a conventional supporting structure 18 mounted in a sealed manner on the spray pipe 12. For example, the mounting can be accomplished by welding the structure 18 to the pipe 12, as shown, after being positioned in the receiving aperture 11 of the pipe.

A lock nut 19 is screwed onto the body member 10 until it seats against the top of the structure 18 to assist in retaining the parts together. The tubular body member 10 has an open bottom end 20 and a central opening 22 at its upper end. The supporting structure 18 may be formed of a conventional material, such as a plastics material.

An L-shaped bracket portion 24 extends upwards from the upper end of the tubular body 10 and over-lies the opening 22 at the upper end thereof. Mounted in the overlying portion of the bracket 24 in a conventional manner and extending downwardly therefrom is a valve member 26 which is in alignment with the open upper end 22 of the tubular body 10 and in position for co-operation with a plunger 28 slidably mounted in the interior of the tubular body 10. The plunger 28 slides within the bore of the tubular body 10 and is in sealing engagement therewith by means of a sealing gasket or 0-ring 30 positioned in a recess in the exterior surface of the plunger 28 and in engagement with the interior wall of the body 10.

The plunger 28, which is also generally tubular in configuration, comprises a base wall 34, a larger outer diameter lower side wall portion 36, and a narrower outer diameter upper side wall portion 38. The plunger is hollow to form a central interior passageway or chamber 40 which is open at the upper end 42 of the plunger, the opening 42 being surrounded by a bevelled peripheral edge 44 which forms a partial bearing surface for the adjacent conically shaped undersurface 46 of the valve member 26. The relative shapes of the undersurface 46 of the valve member and the bevelled peripheral rim of the plunger opening 42 provide the desired spray pattern and purging flow pattern in the two operative conditions of the nozzle in a manner well known from the prior art. The plunger 28 is preferably formed of a similar material to the tubular body 10, such as stainless steel.

The upper end portion 16 of the tubular body 10 is formed with an inwardly extending annular shoulder or flange 48 which bounds the opening 22 in the upper end of the body 10. The under surface of this flange 48 co-operates with an opposing annular shoulder 50, formed at the junction between the larger outer diameter wall portion 36 and the narrower outer diameter upper wall portion 38 of the plunger 28, to form a recess 52 housing a helical compression spring 54 which tends to force the plunger 28 downwards with respect to the fixed tubular body 10. Downward movement of the plunger is limited by a stop ring 56 retained in an annular groove 58 adjacent the bottom open end 20 of the tubular body 10 and extending inwards so as to form an abutment for the under surface of the base 34 of the plunger. Thus, the axial movement of the plunger 28 relative to the tubular body 10 is restricted by the stop ring 56 in one direction and by the valve member 26 in the other direction.

The lower portion 14 of the tubular body 10 which extends into the interior of the spray supply pipe 12 includes, in addition to its open bottom end 20, an arrangement of openings through its side wall. In the depicted embodiment, there are four such openings 60 spaced at 90° intervals about the peripheral surface of the tubular body and providing communication between the interior of the pipe 12 and the interior of the body 10.

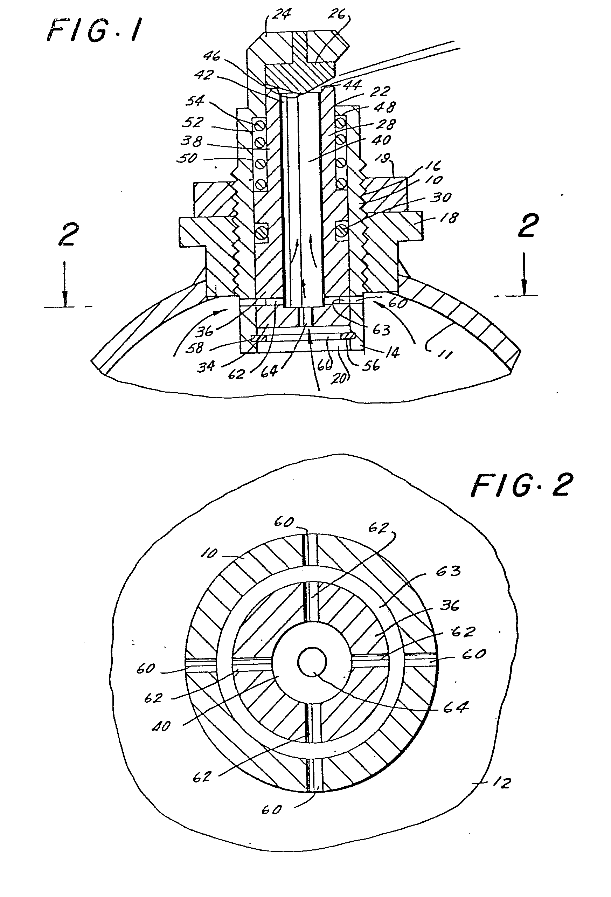

The plunger 28 has a similar arrangement of four ports 62 through its lower side wall portion 36. These ports 62 are spaced at 90° intervals about the periphery of the plunger 28 in position for alignment with the openings 60 of the tubular body 10 (as shown in Figures 1 and 2) in a particular axial relative position of the body 10 and the plunger 28, i.e. in the spray condition of the nozzle when the plunger 28 is urged upwards into engagement with the valve member 26 against the action of the spring 54. The ports 62 are inter-connected by an annular groove 63 to accommodate any mis-alignment between the ports and the openings 60 in the tubular body and to facilitate maintenance of communication between the passageways. Alternatively, the groove 63 could be positioned in the internal surface of the tubular body 10 instead of in the outer surface of the plunger 28, or instead of a single circumferential groove, an interrupted groove or groove segments may be used in either the tubular body or the plunger for the same purpose. In this condition, as depicted in Figures 1 and 2, there is communication between the interior of the spray supply pipe 12 and the interior passage 40 within the plunger 28.

A further port 64 is also provided in the plunger 28, this port 64 being centrally located in the base 34 and providing direct communication between the interior of the pipe 12 and the passage 40 via the open end 20 in the base of the tubular body and the open centre 66 of the stop ring 56.

In the spray condition of the nozzle as shown in Figures 1 and 2, alignment is present between all of the openings and ports in the lower portions of the tubular body 10 and the plunger 28, providing five passageways for liquid from the spray supply pipe 12 to enter the passage 40 as shown by the arrows in Figure 1. This liquid is thus directed through the passage 40 to the spray openings formed between the valve member 26 and the upper open end 42 of the plunger for issue from the nozzle as a high pressure spray. All of the liquid from the pipe is directed through these pathways, since all other openings are sealed.

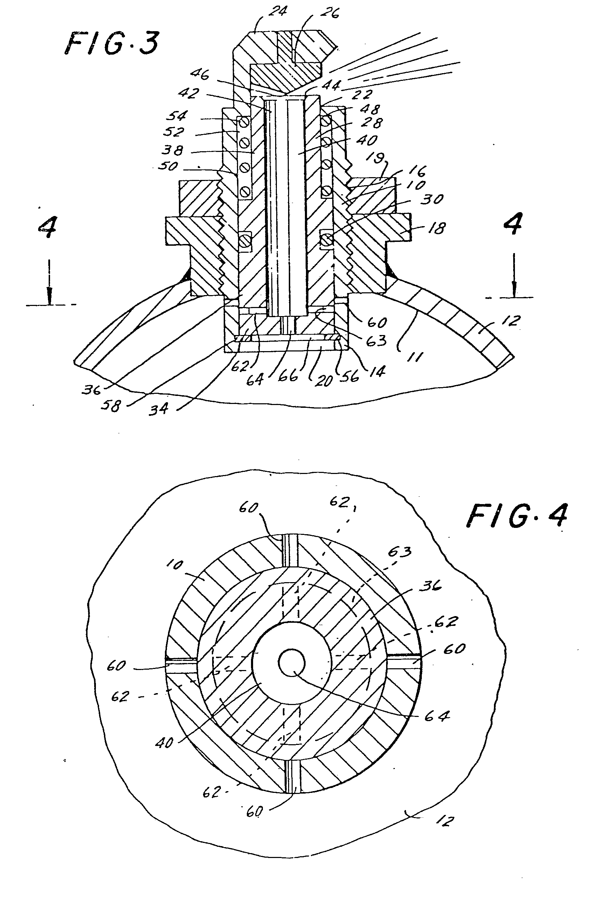

When the nozzle is adjusted to the purge condition, as shown in Figures 3 and 4, the plunger 28 is shifted downwards away from the valve member 26 with the assistance of the biasing force of the helical spring 54, thus providing a larger outlet opening at the upper end of the nozzle for liquid to flow therefrom. At the lower end of the nozzle, the ports 62 in the plunger 28 are moved downwards out of alignment with the openings 60 in the tubular body 10. This cuts off and closes four of the passageways for liquid to pass from the interior of the pipe 12 to the interior of the plunger 28. The only passageway remaining open is through the open end 20 at the bottom of the tubular body 10 and through the base port 64 in the base of the plunger, and this is depicted by an arrow in Figure 3. This results, of course, in addition to the reduced area for liquid to flow into the nozzle from the spray supply pipe, in an increase in pressure on the base 34 of the plunger 28 tending to direct the plunger upwards to the spray position against the bias of the helical spring 54 when returning to the high pressure spray condition as depicted in Figures 1 and 2. The full purge position is determined by the bottoming of the base 34 against the stop ring 56. The number and arrangement, as well as the size, of the openings and ports in the tubular body and the plunger is a matter of choice depending upon the type of flow desired.

The passage 40 in the interior of the plunger 28 forms a liquid chamber to serve as a reservoir which is fed via the hole 64 in the base 34 of the plunger and the open bottom end of the tubular body and, when in the spray position, the four ports 62 in alignment with the openings 60 in the side walls of the plunger 28 and the tubular body respectively.

When the nozzle is open, i.e. in the purge position, only the bottom port 64 supplies liquid from the pipe 12 for purging. By selecting the size of this port 64, the amount of liquid discharged can be controlled. When the nozzle is closed, i.e. in the spray position, the reservoir 40 is fed by all five passageways to properly supply the spray. The recess provides for more easily sizing of the system with a single water supply. In fact, a nozzle can be tailor made to fit a shower system by changing the hole sizes and arrangement.

In addition to the above described nozzle in which water pressure and spring pressure are operative to shift the nozzle between operative conditions, other conventional means for shifting the nozzle between the purge and spray positions well known in the art, such as in the references mentioned earlier, can be employed to facilitate and accomplish the shifting action.

## Claims

1. A spray nozzle for a dual-purpose shower system which has a first operative condition in which liquid is discharged from the nozzle as a high pressure spray and a second operative condition in which liquid is discharged from the nozzle in the form of a low pressure purging flow, the nozzle comprising a generally tubular body (10), a plunger (28) slidably fitted in the tubular body and movable therein between first and second operative positions, a central passage (40) in the plunger and communicating with the outside of the nozzle so that, in use, liquid can enter the nozzle at one end for discharge from the nozzle at its other end, sealing means (30) between the tubular body and the plunger for confining the liquid flow through the nozzle to the central passage, a valve member (26) carried by the tubular body and disposed in alignment with the central passage so that, in the first operative position of the plunger, an end of the plunger abuts the valve member whereby a blocking surface of the valve member over-lies and blocks a first portion of the central passage and a spray forming surface of the valve member over-lies a second portion of the central passage but is spaced therefrom to cause liquid passing through the central passage in the first operative position to impinge on the spray forming surface and be discharged from the nozzle as a spray, the plunger being arranged to be retained in the spray forming position during the first operative condition of the system by the pressure of the liquid acting on the plunger, means for shifting the plunger from its first to its second operative position when the system is changed to the second operative condition thereby moving the end of the plunger away from the valve member to allow liquid to be discharged from the nozzle in a relatively free flow, and characterised by a flow volume control (60-64) responsive to movement of the plunger between its first and second operative positions to vary the area through which liquid can enter the central passage of the plunger.

2. A spray nozzle as claimed in claim 1, in which the flow volume control comprises a plurality of ports (62, 64) in the plunger opening into the central passage, and a plurality of openings (20, 60) in the tubular body positioned so that a predetermined number of ports are aligned with openings in the body in the first operative or spray position of the plunger, and a different predetermined number of ports are aligned with openings in the tubular body in the second operative or purge position of the plunger.

3. A spray nozzle according to claim 2, in which there is at least one groove (63) in either the plunger or the tubular body to inter-connect openings and ports therein and facilitate communication therebetween.

4. A spray nozzle according to claim 3, in which there is one continuous annular groove (63) in the plunger communicating with ports therein and adapted to be brought into communication with openings in the tubular body.

5. A spray nozzle according to claim 2, in which the openings in the tubular body comprise an open end (20) at one end of the body and a number of openings (60) spaced about the periphery of the tubular body adjacent the open end, and the ports in the plunger comprise a hole (64) through an end wall of the plunger adjacent the open end of the body and remote from the end of the plunger which abuts the valve member in the spray position and a number of holes (62) through the periphery of the plunger adjacent its end wall.

6. A spray nozzle according to claim 5, in which there are four ports (62) of predetermined diameter spaced about the periphery of the plunger and inter-connected by a peripheral annular groove (63) in the plunger, there is a single port (64) of predetermined diameter in the end wall of the plunger, and there are four openings (60) of predetermined diameter spaced about the periphery of the tubular body and positioned so that when the plunger is in the spray position the openings in the periphery of the tubular body are aligned with the peripheral groove in the plunger to permit liquid to enter the central passage through the peripheral openings and ports as well as through the open end of the body and the port in the end wall of the plunger, but when the plunger is shifted to the purge position the peripheral groove in the plunger is moved out of communication with the openings in the periphery of the tubular body so that liquid is able to enter the central passage only through the open end of the tubular body and the port in the end wall of the plunger.

7. A spray nozzle according to claim 5 or claim 6 in which the means for shifting the plunger from the first to the second operative position comprises a spring (54) housed between adjacent walls of the plunger and the tubular body and acting between lateral shoulders formed on the plunger and the body, so that when the plunger is moved into the spray position the spring will be compressed and will tend to return the plunger to the purge position, and when the plunger is in the purge position and its peripheral ports are not aligned with the peripheral openings in the tubular body all of the liquid flowing into the central passage of the plunger passes through the open end of the tubular body and the port in the end wall of the plunger, and when the liquid pressure acting on the end wall of the plunger increases to return the plunger to the spray position the alignment of the peripheral ports in the plunger with the peripheral openings in the tubular body will increase the flow passage area for liquid into the central passage of the plunger and thus reduce the effective pressure acting on the end wall of the plunger.

8. A spray nozzle according to any one of the preceding claims, in which the nozzle is mounted in the wall (12) of a spray supply pipe of a dual-purpose shower system having a single water supply, one end of the tubular body projecting into the spray supply pipe so that water is able to enter and flow through the central passage.

## Revendications

1. Buse de pulvérisation pour un système rinceur à double usage, qui possède un premier état actif dans lequel le liquide est évacué de la buse sous la forme d'une pulvérisation à haute pression et un second état actif dans lequel le liquide est évacué de la buse sous la forme d'un écoulement de purge à basse pression, la buse comportant un corps de forme générale tubulaire (10), un plongeur (28) monté de façon à pouvoir glisser dans le corps tubulaire et déplacable dans ce dernier entre la première et la seconde positions actives, un passage central (40) situé dans le plongeur et communiquant avec l'extérieur de la buse, de sorte que, en cours d'utilisation, le liquide peut pénétrer dans la buse à une extrémité pour sortir de la buse à son autre extrémité, des moyens d'étanchéité (30) entre le corps tubulaire et le plongeur pour confiner l'écoulement du liquide à travers la buse vers le passage central, un élément de valve (26) porté par le corps tubulaire et placé en alignement avec le passage central, de sorte que, dans la première position active du plongeur, une extrémité du plongeur est en butée contre l'élément de valve, grâce à quoi une surface de blocage de l'élément de valve est superposée à et bloque une première partie du passage central, et une surface de l'élément de valve, mettant en forme la pulvérisation, est superposée à une seconde partie du passage central, tout en en étant écartée de manière à provoquer le passage du liquide à travers le passage central dans le premier état actif de manière qu'il tombe sur la surface mettant en forme la pulvérisation et soit évacué de la buse sous la forme d'une pulvérisation, le plongeur étant agencé de manière à être retenu dans la position de mise en forme de la pulvérisation, pendant le premier état actif du système, par la pression du liquide agissant sur le plongeur, des moyens pour amener le plongeur de sa première à sa seconde position active lorsque le système est commuté dans le second état actif, ce qui provoque l'écartement de l'extrémité du plongeur par rapport à l'élément de valve de manière à permettre au liquide d'être évacué par la buse suivant un écoulement relativement libre, et caractérisée par une commande (60-64) du volume d'écoulement, sensible à un déplacement du plongeur entre sa première et sa seconde positions actives de manière à modifier la surface à travers laquelle le liquide peut pénétrer dans le passage central du plongeur.

2. Buse de pulvérisation telle que revendiquée dans la revendication 1, dans laquelle la commande du volume d'écoulement comporte plusieurs orifices (62, 64) situés dans le plongeur et s'ouvrant dans le passage central, et plusieurs ouvertures (20, 60) situées dans le corps tubulaire et positionnées de telle manière qu'un nombre prédéterminé d'orifices soient alignés avec des ouvertures situées dans le corps, dans la première position active ou de pulvérisation du plongeur, et un nombre prédéterminé différent d'orifices sont alignés avec des ouvertures situées dans le corps tubulaire, dans le second état actif ou de purge du plongeur.

3. Buse de pulvérisation conformément à la revendication 2, dans laquelle il existe au moins une gorge (63) située soit dans le plongeur, soit dans le corps tubulaire pour interconnecter les ouvertures et les orifices situés en leur intérieur et faciliter la communication entre eux.

4. Buse de pulvérisation conformément à la revendication 3, dans laquelle il existe une gorge annulaire continue (63) située dans le plongeur et communiquant avec des orifices situés dans ce dernier, et apte à être mise en communication avec des ouvertures situées dans le corps tubulaire.

5. Buse de pulvérisation conformément à la revendication 2, dans laquelle les ouvertures situées dans le corps tubulaire comportent une extrémité ouverte (20) à une extrémité du corps et un certain nombre d'ouvertures (60) espacées sur la périphérie du corps tubulaire au voisinage de l'extrémité ouverte, et les orifices situés dans le plongeur comportent un trou (64) traversant une paroi d'extrémité du plongeur au voisinage de l'extrémité ouverte du corps et à distance de l'extrémité du plongeur, qui vient buter contre l'élément de valve dans la position de pulvérisation et un certain nombre de trous (62) traversant le pourtour du plongeur au voisinage de sa paroi d'extrémité.

6. Buse de pulvérisation conformément à la revendication 5, dans laquelle il existe quatre orifices (62) possédant un diamètre prédéterminé, espacés sur le pourtour du plongeur et interconnectés par une gorge annulaire périphérique (63) ménagée dans le plongeur, il existe un orifice unique (64) possédant un diamètre prédéterminé dans la paroi d'extrémité du plongeur, et il existe quatre ouvertures (60) possédant un diamètre prédéterminé espacées sur le pourtour du corps tubulaire et posi- tionées de telle sorte que, lorsque le plongeur est dans la position de pulvérisation, les ouvertures situées dans le pourtour du corps tubulaire sont alignées avec la gorge périphérique située dans le plongeur de manière à permettre au liquide de pénétrer dans le passage central par l'intermédiaire des ouvertures et des orifices périphériques ainsi que par l'intermédiaire de l'extrémité ouverte du corps et de l'orifice situé dans la paroi d'extrémité du plongeur, mais que, lorsque le plongeur est déplacé dans la position de purge, la gorge périphérique située dans le plongeur est mise hors de communication avec les ouvertures situées dans le pourtour du corps tubulaire de sorte que le liquide peut pénétrer dans le passage central uniquement par l'intermédiaire de l'extrémité ouverte du corps tubulaire et de l'orifice situé dans la paroi d'extrémité du plongeur.

7. Buse de pulvérisation conformément à la revendication 5 ou à la revendication 6, dans laquelle les moyens permettant de déplacer le plongeur de la première à la seconde position active comportent un ressort (54) logé entre des parois adjacentes du plongeur et le corps tubulaire et agissant entre des épaulements latéraux ménagés sur le plongeur et sur le corps, de sorte que, lorsque le plongeur est déplacé dans la positon de pulvérisation, le ressort sera comprimé et tendra à ramener le plongeur dans la position de purge, et que, lorsque le plongeur est dans la position de purge et que ses orifices périphériques ne sont pas alignés avec les ouvertures périphériques situées dans le corps tubulaire l'ensemble du liquide s'écoulant dans le passage central du plongeur passe par l'extrémité ouverte du corps tubulaire et par l'orifice situé dans la paroi d'extrémité du plongeur, et, lorsque la pression du liquide agissant sur la paroi d'extrémité du plongeur augmente pour amener le plongeur dans la position de pulvérisation, l'alignement des orifices périphériques situés dans le plongeur avec les ouvertures périphériques situées dans le corps tubulaire augmente la surface de passage de l'écoulement pour le liquide pénétrant dans le passage central du plongeur et réduise ainsi la pression effective agissant sur la paroi d'extrémité du plongeur.

8. Buse de pulvérisation conformément à l'une quelconque des revendications précédentes, dans laquelle la buse est montée dans la paroi (12) d'une canalisation d'alimentation de pulvérisation d'un système rinceur à double usage possédant une seule alimentation en eau, une extrémité du corps tubulaire faisant saillie à l'intérieur de la canalisation d'alimentation de pulvérisation de sorte que l'eau peut pénétrer dans le passage central et s'y écouler.

## Patentansprüche

1. Sprühdüse für ein Doppelzweck-Duschsystem mit einer ersten Betriebsstellung, in der die Flüssigkeit aus der Düse als Hochdrucksprühregen ausströmt und einer zweiten Betriebsstellung, in der die Flüssigkeit aus der Düse in Form einer Niedrigdruckauslaßströmung ausströmt, wobei die Düse einen etwa rohrförmigen Körper (10), einen verschiebbar im rohrförmigen Körper eingepaßten und darin zwischen der ersten und zweiten Betriebsstellung bewegbaren Kolben (28), sowie eine mittige Bohrung (40) im Kolben aufweist, die derart mit dem Düsenausgang Kommuniziert, daß im Betrieb Flüssigkeit in die Düse an ihrem einen Ende eintreten und von der Düse an ihrem anderen Ende austreten kann, wobei ein Dichtungsmittel (30) zwischen dem rohrförmigen Körper und dem Kolben angeordnet ist, um den Flüssigkeitsstrom durch die Düse auf die mittige Bohrung zu begrenzen und wobei ein Ventil (26) vorgesehen ist, das vom rohrförmigen Körper getragen und derart zur mittigen Bohrung ausgerichtet angeordnet ist, daß in der ersten Betriebsstellung des Kolbens ein Ende des Kolbens an das Ventil angrenzt, wodurch eine Blockierungsfläche des Ventils über einem ersten Teil der mittigen Bohrung liegt und ihn absperrt und eine Sprühregen bildende Fläche des Ventils über einem zweiten Teil der mittigen Bohrung liegt, jedoch davon beabstandet ist, damit Flüssigkeit durch die mittige Bohrung in der ersten Betriebsstellung hindurchläuft, um auf die Sprühregen bildende Fläche aufzutreffen und von der Düse als Sprühregen ausgestoßen wird, wobei der Kolben derart angeordnet ist, daß er in der Sprühregen bildenden Stellung während der ersten Betriebsstellung des Systems gehalten wird, indem der Flüssigkeitsdruck auf den Kolben wirkt, und wobei Mittel vorgesehen sind, die den Kolben von seiner ersten zue zweiten Betriebsstellung verschieben, wenn das System zur zweiten Betriebsstellung verändert wird, wodurch das Ende des Kolbens vom Ventil wegbewegt wird, damit Flüssigkeit aus der Düse in einem relativ freien Fluß abgelassen werden kann, dadurch gekennzeichnet, daß eine Strömungsvolumensteuerung (60 bis 64) vorgesehen ist, die auf die Bewegung des Kolbens zwischen seiner ersten und zweiten Betriebsstellung unter Veränderung des Bereiches, durch den die Flüssikkeit in die mittige Bohrung des Kolbens eintreten kann, anspricht.

2. Sprühdüse nach Anspruch 1, dadurch gekennzeichnet, daß die Strömungsvolumensteuerung eine Vielzahl von Löchern (62, 64) im Kolben umfaßt, die such zur mittigen Bohrung öffnen, und daß eine Vielzahl von Öffnungen (20, 60) im rohrförmigen Körper derart angeordnet sind, daß eine vorbestimmte Anzahl der Löcher zu den Öffnungen im Körper in der ersten Betriebs- oder Sprühregenstellung des Kolbens ausgerichtet sind, und daß eine abweichende vorbestimmte Anzahl von Löchern zu den Öffnungen im rohrförmigen Körper in der zweiten Betriebs- oder Auslaßstellung des Kolbens ausgerichtet sind.

3. Sprühdüse nach Anspruch 2, dadurch gekennzeichnet, daß mindestens eine Nut (63) entweder im Kolben uder im rohrförmigen Körper ausgebildet ist, um die Öffnungen und Löcher darin miteinander zu verbinden und das Kommunizieren zwischen ihnen zu erleichtern.

4. Sprühdüse nach Anspruch 3, dadurch gekennzeichnet, daß eine kontinuierliche ringförmige Nut (63) im Kolben vorgesehen ist, die mit den Löchern darin kommuniziert und angepßt ist, daß sie mit den Öffnungen im rohrförmigen Körper in Verbindung gebracht werden kann.

5. Sprühdüse nach Anspruch 2, dadurch gekennzeichnet, daß die Öffnungen im rohrförmigen Körper ein offenes Ende (20) an einem Ende des Körpers und eine Anzahl von Öffnungen (60) umfassen, die beabstandet voneinander am Außenumfang des rohrförmigen Körpers angrenzend an das offene Ende angeordnet sind, und daß die Löcher im Kolben eine Durchtrittsöffnung (64) durch eine Endwand des Kolbens umfassen, die angrenzend an das offene Ende des Körpers und entfernt von dem Ende des Kolbens angeordnet ist, das an das Ventil in der Sprühregenstellung angrenzt, und daß eine Anzahl von Durchtrittsöffnungen (62) durch den Außenumfang des Kolbens angrenzend an seine Endwand vorgesehen sind.

6. Sprühdüse nach Anspruch 5, dadurch gekennzeichnet, daß vier Löcher (62) vorbestimmtem Durchmessers beabstandet am Außenumfang des Kolbens angeordnet und miteinander durch eine Außenumfangsringnut (63) im Kolben verbunden sind, wobei ein Einzelloch (64) vorbestimmten Durchmessers in der Endwand des Kolbens vorgesehen ist, und daß vier Öffnungen (60) vorbestimmten Durchmessers beabstandet am Außenumfang des rohrförmigen Körpers derart angeordnet sind, daß, wenn der Kolben in seiner Sprühregenstellung ist, die Öffnungen in dem Außenumfang des rohrförmigen Körpers zur Außenumfangsnut im Kolben ausgerichtet sind, damit Flüssigkeit in die mittige Bohrung durch die Außenumfangs- öffnungen und Löcher, sowie durch das offene Ende des Körpers und das Loch in der Endwand des Kolbens eintreten kann, jedoch wenn der Kolben in die Auslaßstellung geschoben wird, die Umfangsnut im Kolben aus der Verbindung mit den Öffnungen im Umfang des rohrförmigen Körpers herausbewegt wird, so daß Flüssigkeit nur durch das offene Ende des rohrförmigen Körpers und das Loch in der Endwand des Kolbens in die mittige Bohrung eintreten kann.

7. Sprühdüse nach Anspruch 5 oder 6, dadurch gekennzeichnet, daß Mittel zum Schieben des Kolbens von der ersten zur zweiten Betriebsstellung vorgesehen sind, die eine Feder (54) umfassen, die zwischen den angrenzenden Wänden des Kolbens und dem rohrförmigen Körper aufgenommen ist und zwischen den seitlichen auf dem Kolben und dem Körper ausgebildeten Schultern wirkt, so daß die Feder zusammengedrückt wird, wenn der Kolben in seine Sprühregenstellung bewegt wird und dazu neigt, den Kolben in die Auslaßstellung zurückzudrücken, und daß, wenn der Kolben in der Auslaßstellung ist und seine Umfangslöcher nicht zu den Umfangsöffnungen im rohrförmigen Körper ausgerichtet sind, die gesamte Flüssigkeit, die in die mittige Bohrung des Kolbens fließt, das offene Ende des rohrförmigen Körpers und das Loch in der Endwand des Kolbens durchläuft, und wenn der auf die Endwand des Kolbens wirkende Flüssigkeitsdruck zunimmt, um den Kolben in seine Sprühregenstellung zurückzudrücken, die Ausrichtung der Außenumfangslöcher im Kolben mit den Außenumfangslöchern im rohrförmigen Körper den Strömungsmitteldurchtrittsbereich für die Flüssigkeit in die mittige Bohrung des Kolbens erhöhen und dadurch die tatsächlich auf die Endwand des Kolbens wirkende Kraft reduziert.

8. Sprühdüse nach einem der vorstehenden Ansprüche 1 bis 7, dadurch gekennzeichnet, daß die Düse an einer Wand (12) eines Sprühregennachschubrohres eines Doppelzweck-Durchsystems mit einem einzigen Wasseranschluß befestigt ist, wobei ein Ende des rohrförmigen Körpers in das Sprühregenachschubrohr hineinragt, so daß das Wasser in die mittige Bohrung eintreten und durchfließen kann.
